(19) Europäisches Patentamt
European Patent Office
Office européen des brevets

(11) EP 4 026 871 A1

(12) **EUROPEAN PATENT APPLICATION**
published in accordance with Art. 153(4) EPC

(43) Date of publication:
**13.07.2022 Bulletin 2022/28**

(21) Application number: **20860621.0**

(22) Date of filing: **03.09.2020**

(51) International Patent Classification (IPC):
***C08K 5/29** (2006.01)* ***C08L 69/00** (2006.01)*
***C09D 169/00** (2006.01)* ***C09D 11/10** (2014.01)*
***C08G 18/44** (2006.01)*

(52) Cooperative Patent Classification (CPC):
**C08G 18/44; C08K 5/29; C08L 69/00; C09D 11/10; C09D 169/00**

(86) International application number:
**PCT/JP2020/033434**

(87) International publication number:
**WO 2021/045154 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2019 JP 2019163141**

(71) Applicant: **MITSUBISHI GAS CHEMICAL COMPANY, INC.**
**Chiyoda-ku**
**Tokyo 100-8324 (JP)**

(72) Inventor: **YOSHIYA, Kohei**
**Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

# (54) POLYCARBONATE RESIN COMPOSITION

(57) The present invention provides a polycarbonate-based coating resin composition which exhibits high adhesiveness. The above are achieved by means of a polycarbonate resin composition which contains (A) a polycarbonate resin that contains a constituent unit represented by general formula (1) and a terminal structure represented by general formula (2) and (B) a polyisocyanate compound, wherein 0.1% by mass or more of the polyisocyanate compound (B) is contained on the basis of the total mass of the polycarbonate resin (A) and the polyisocyanate compound (B). (In formula (1) and formula (2), $R_1$ to $R_3$, X, m and n are as defined in the description.)

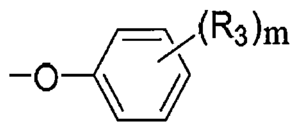

(2)

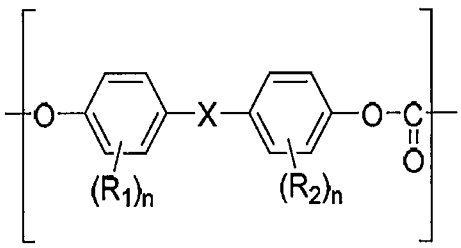

(1)



Processed by Luminess, 75001 PARIS (FR)

## Description

TECHNICAL FIELD

The present invention relates to a polycarbonate resin composition and the like, more particularly, to a polycarbonate resin composition which can be used as a polycarbonate coating resin solution and the like having excellent adhesiveness to a substrate.

BACKGROUND ART

Polycarbonate resins are excellent in transparency and formability and also has superior mechanical properties like impact resistance, and thus they are utilized in electric appliances and machine products like automobiles. In particular, polycarbonate resin solutions are known for obtaining thin films having functional properties and for coating objects (Patent literature 1)

Although coatings resulting from polycarbonate resin solutions are excellent in durability such as impact resistance, they are inferior in adhesiveness and therefore they are rather known for their application to easily peelable polish (Patent literature 2). Hence, there is room for improvement in adhesiveness between such coatings and substrates.

As a resin composition composed of a blend of a polycarbonate resin and other resin, for example, a resin blend composition of a polycarbonate resin and a polyphenylene ether resin is known, but such a resin blend compositions cannot achieve improved adhesiveness (Patent literature 3). Thus, development of a polycarbonate resin composition, which can achieve improved adhesiveness between the coating and a substrate has been desired.

PRIOR ART DOCUMENTS

PATENT DOCUMENTS

Patent literature 1: Japanese Unexamined Patent Application Publication No.

Patent literature 2: Japanese Unexamined Patent Application Publication No. 2014-024789

Patent literature 3: Japanese Patent No. 6340811

SUMMARY OF THE INVENTION

PROBLEMS TO BE SOLVED BY THE INVENTION

The present invention provides a resin blend composition comprising a polycarbonate resin and other resin, which can achieve improved adhesiveness between the coating and a substrate.

MEANS FOR SOLVING THE PROBLEMS

The present inventors have gone through extensive research, and as a result of which found that a resin blend composition comprising a specific polycarbonate resin and a polyisocyanate compound can be used in a solution for forming a strong coating that is highly adhesive to a substrate, thereby accomplishing the present invention.

Specifically, the present invention comprises the following aspects.

<1> A polycarbonate resin composition comprising:

a polycarbonate resin (A) containing a structural unit represented by General formula (1) below and a terminal structure represented by General formula (2) below; and
a polyisocyanate compound (B),
wherein the polyisocyanate compound (B) is contained in an amount of not less than 0.1% by mass relative to the total mass of the polycarbonate resin (A) and the polyisocyanate composition (B):

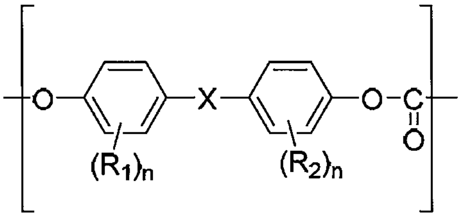

(1)

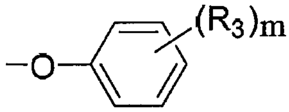

(2)

(in Formula (1),

$R_1$ and $R_2$ are each independently a C1-C4 alkyl group,
n are each independently an integer of 0-4 (provided that not all of n are zero), and
X is -O-, -S-, -SO-, $-SO_2-$, -CO- or a divalent group represented by any of General formulae (3)-(8) below),
(in Formula (2),
R3 each independently represent a C1-C8 alkyl group which may be substituted with a hydroxy group, and
m is an integer of 0-5),

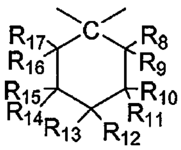 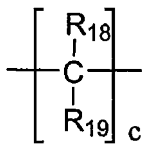 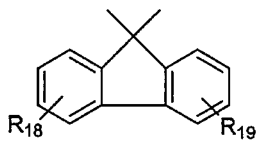

(3) (4) (5)

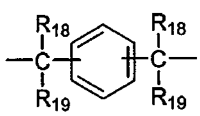 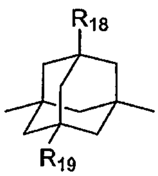 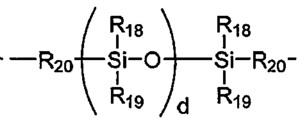

(6) (7) (8)

(in General formula (3),

$R_8$-$R_{17}$ each independently represent hydrogen or a C1-C3 alkyl group, and
at least one of $R_8$-$R_{17}$ represents a C1-C3 alkyl group; and
in General formulae (4)-(8),
$R_{18}$ and $R_{19}$ each independently represent hydrogen, a halogen, an optionally substituted C1-C20 alkyl group, an optionally substituted C1-C5 alkoxy group, an optionally substituted C6-C12 aryl group, an optionally substituted C7-C17 aralkyl group or an optionally substituted C2-C15 alkenyl group, or
$R_{18}$ and $R_{19}$ bind to each other to form a C3-C20 carbocyclic ring or a C1-C20 heterocyclic ring,
$R_{20}$ is an optionally substituted C1-C9 alkylene group,
c represents an integer of 0-20, and
d represents an integer of 1-500).

<2> The polycarbonate resin composition according to <1> above, wherein, in General formula (1) above, $R_1$ and $R_2$ are methyl groups, and n are all 1.
<3> The polycarbonate resin composition according to <2> above, wherein, in General formula (4) above, $R_{18}$ and

$R_{19}$ are methyl groups, and c is 1.

<4> The polycarbonate resin composition according to any one of <1> to <3> above, wherein the structural unit represented by General formula (1) above is contained in an amount of not less than 40 mol% relative to the number of moles of all structural units contained in the polycarbonate resin (A).

<5> The polycarbonate resin composition according to any one of <1> to <4> above, wherein $R_3$ in General formula (2), as the terminal group of the polycarbonate resin (A), is a C1-C4 alkyl group which may be substituted with one hydroxy group.

<6> The polycarbonate resin composition according to any one of <1> to <5> above, wherein the viscosity average molecular weight (Mv) of the polycarbonate resin is 10,000-60,000.

<7> The polycarbonate resin composition according to any one of <1> to <6> above, which is a mixture of the polycarbonate resin (A) and the polyisocyanate compound (B).

<8> The polycarbonate resin composition according to any one of <1> to <7> above, wherein the polyisocyanate compound (B) comprises at least either one of hexamethylene diisocyanate and xylylene diisocyanate.

<9> A resin solution comprising the polycarbonate resin composition according to any one of <1> to <8> above, and an organic solvent.

<10> The resin solution according to <9> above, wherein the organic solvent comprises at least any one of a non-halogenated solvent, an ester-based solvent, an ether-based solvent, a carbonate ester-based solvent and a ketone-based solvent.

<11> A print ink, in which the resin solution according to either one of <9> and <10> above is used as a binder resin solution.

<12> A substrate film applied with the print ink according to <11> above.

<13> A film or coating, comprising the polycarbonate resin composition according to any one of <1> to <8> above.

<14> The film or coating according to <13> above, wherein the film comprises a film laminate.

## ADVANTAGEOUS EFFECT OF THE INVENTION

A resin coating resulting from a resin solution comprising the resin composition of the present invention is advantageous in that it is highly adhesive to a substrate and less prone to peeling as compared to conventional polycarbonate resin coatings.

## EMBODIMENTS FOR CARRYING OUT THE INVENTION

The present invention relates to a polycarbonate resin composition comprising a specific polycarbonate resin and a polyisocyanate compound, a resin solution containing the polycarbonate resin composition and else, a print ink comprising the resin solution, a substrate film applied with the print ink, and a film or coating comprising the polycarbonate resin composition. Hereinafter, each of these subjects of the present invention will be described.

### 1. Polycarbonate resin composition

As described above, the polycarbonate resin composition of the present invention comprises a polycarbonate resin (A) and a polyisocyanate compound (B). The polycarbonate resin composition preferably contains the polycarbonate resin (A) and the polyisocyanate compound (B) as a mixture.

As described above, the polycarbonate resin composition of the present invention comprises not less than 0.1 parts by mass of the polyisocyanate compound (B) relative to the total mass of the polycarbonate resin (A) and the polyisocyanate compound (B). In one embodiment of the present invention, the amount of the polyisocyanate compound (B) contained in the above-mentioned total mass may be not less than 1.0 parts by mass, preferably not less than 3.0 parts by mass, more preferably not less than 5.0 parts by mass, still more preferably not less than 6.5 parts by mass, particularly preferably not less than 8.0 parts by mass, and, for example, more than 10 parts by mass.

In one embodiment of the present invention, the amount of the polyisocyanate compound (B) contained in the polycarbonate resin composition may be not less than 0.1 parts by mass, preferably not less than 1.0 parts by mass, more preferably not less than 3.0 parts by mass, still more preferably not less than 5.0 parts by mass, particularly preferably not less than 8.0 parts by mass, and, for example, more than 10 parts by mass, relative to 100 parts by mass of the polycarbonate resin (A).

Since the adhesive effect can be achieved even if the polyisocyanate compound (B) is used in an excessive amount with respect to the polycarbonate resin (A), the upper limit of the content of the polyisocyanate compound (B) in the resin composition is not so important, but in one embodiment of the present invention, the amount of the polyisocyanate compound (B) may be, for example, not more than 50% by mass, preferably not more than 45% by mass, more preferably not more than 40% by mass, still more preferably not more than 35% by mass, and particularly preferably

not more than 30% by mass, relative to the total mass mentioned above.

Furthermore, the amount of the polyisocyanate compound (B) may be, for example, not more than 50 parts by mass, preferably not more than 45 parts by mass, more preferably not more than 40 parts by mass, still more preferably not more than 35 parts by mass, and particularly preferably not more than 30 parts by mass, relative to 100 parts by mass of the polycarbonate resin (A).

2. Polycarbonate resin (A)

As described above, the polycarbonate resin (A) contained in the polycarbonate resin composition has a structural unit represented by Formula (1) (hereinafter, also referred to as the structural unit (1)) and a terminal structure represented by Formula (2) (hereinafter, also referred to as the terminal structure (2)).

Here, the oxygen atom of the terminal structure (2) binds to the carbonyl carbon (carbon of the carbonyl group, i.e., C = O) of the structural unit at the end of the polymer chain of the structural unit represented by Formula (1):

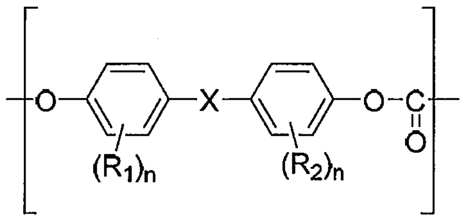
(1)

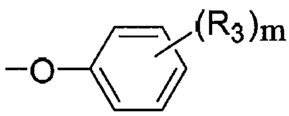
(2)

(in Formula (1),

$R_1$ and $R_2$ are each independently a C1-C4 alkyl group,
n are each independently an integer of 0-4 (provided that not all of n are zero), and
X is -O-, -S-, -SO-, $-SO_2-$, -CO- or a divalent group represented by any of General formulae (3)-(8) below),
(in Formula (2),
$R_3$ each independently represent a C1-C8 alkyl group which may be substituted with a hydroxy group, and
m is an integer of 0-5),

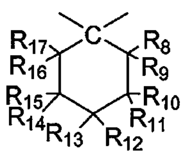 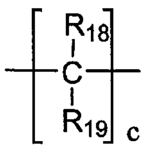 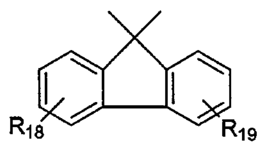
(3) (4) (5)

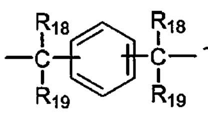 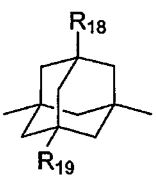 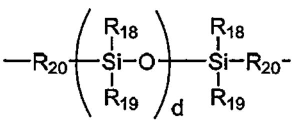
(6) (7) (8)

(in General formula (3),
$R_8$-$R_{17}$ each independently represent hydrogen or a C1-C3 alkyl group, and

at least one of $R_8$-$R_{17}$ represents a C1-C3 alkyl group; and
in General formulae (4)-(8),
$R_{18}$ and $R_{19}$ each independently represent hydrogen, a halogen, an optionally substituted C1-C20 alkyl group, an optionally substituted C1-C5 alkoxy group, an optionally substituted C6-C12 aryl group, an optionally substituted C7-C17 aralkyl group or an optionally substituted C2-C15 alkenyl group, or
$R_{18}$ and $R_{19}$ bind to each other to form a C3-C20 carbocyclic ring or a C1-C20 heterocyclic ring,
$R_{20}$ is an optionally substituted C1-C9 alkylene group,
c represents an integer of 0-20, and
d represents an integer of 1-500).

In one embodiment of the present invention, the terminal structure (2) may be contained in an amount of 0.5 mol% to 12 mol% (inclusive), preferably 1.0 mol% to 10 mol% (inclusive), and more preferably 1.5 mol% to 8 mol% (inclusive) relative to the total number of moles of the structural unit (1) and the terminal structure (2).

(i) Structural unit (1)

In one embodiment of the present invention, $R_1$ and $R_2$ of the structural unit (1) are each independently a C1-C4 alkyl group, preferably a C1-C3 alkyl group, more preferably a C1-C2 alkyl group and particularly preferably a methyl group.

Moreover, n representing the numbers of $R_1$ and $R_2$ of the structural unit (1) are each independently an integer of 0-4, provided that not all of n are zero. Preferably, the values of n are each independently an integer of 1-4, preferably each independently an integer of 1-3, more preferably each independently an integer of 1 or 2, and still more preferably they are all 1.

In one embodiment of the present invention, X of the structural unit (1) is -O-, -S-, -SO-, $-SO_2-$, -CO- or a divalent group represented by any of General formulae (3)-(8) below.

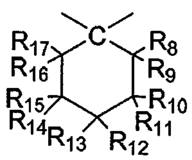
(3)

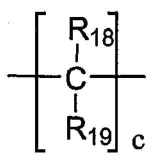
(4)

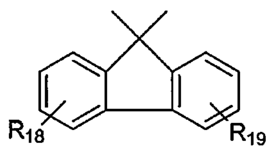
(5)

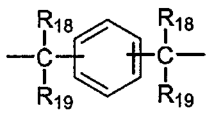
(6)

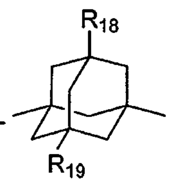
(7)

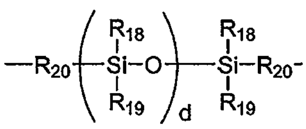
(8)

(In General formula (3),

$R_8$-$R_{17}$ each independently represent hydrogen or a C1-C3 alkyl group, and
at least one of $R_8$-$R_{17}$ represents a C1-C3 alkyl group; and
in General formulae (4)-(8),
$R_{18}$ and $R_{19}$ each independently represent hydrogen, a halogen, an optionally substituted C1-C20 alkyl group, an optionally substituted C1-C5 alkoxy group, an optionally substituted C6-C12 aryl group, an optionally substituted C7-C17 aralkyl group or an optionally substituted C2-C15 alkenyl group, or
$R_{18}$ and $R_{19}$ bind to each other to form a C3-C20 carbocyclic ring or a C1-C20 heterocyclic ring,
$R_{20}$ is an optionally substituted C1-C9 alkylene group,
c represents an integer of 0-20, and
d represents an integer of 1-500).

In one embodiment of the present invention, when X of the structural unit (1) is a divalent group represented by General formula (3) above, $R_8$-$R_{17}$ each independently represent hydrogen or a C1-C3 alkyl group, preferably hydrogen

or a methyl group while at least one of $R_8$-$R_{17}$ represents a C1-C3 alkyl group. In one embodiment of the present invention, $R_8$-$R_{17}$ may each independently represent hydrogen, methyl, ethyl, n-propyl or isopropyl while at least one of $R_8$-$R_{17}$ is methyl, ethyl, n-propyl or isopropyl.

In one embodiment of the present invention, when X of the structural unit (1) is a divalent group represented by any of General formulae (4)-(8) above, $R_{18}$ and $R_{19}$ may each independently represent hydrogen, a halogen, an optionally substituted C1-C20 alkyl group, an optionally substituted C1-C5 alkoxy group, an optionally substituted C6-C12 aryl group, an optionally substituted C7-C17 aralkyl group or an optionally substituted C2-C15 alkenyl group, preferably hydrogen, a halogen, an optionally substituted C1-C10 alkyl group, an optionally substituted C1-C3 alkoxy group, an optionally substituted C6-C8 aryl group, an optionally substituted C7-C12 aralkyl group or an optionally substituted C2-C5 alkenyl group.

In another embodiment of the present invention, $R_{18}$ and $R_{19}$ may bind to each other to form a C3-C20 carbocyclic ring or a C1-C20 heterocyclic ring, preferably a C3-C12 carbocyclic ring or a C1-C12 heterocyclic ring.

In a preferred embodiment of the present invention, $R_{18}$ and $R_{19}$ may bind to each other to form a C3-C12 carbocyclic ring.

In one embodiment of the present invention, when X of the structural unit (1) is a divalent group represented by General formula (8) above, $R_{20}$ may be an optionally substituted C1-C9 alkylene group, preferably an optionally substituted C1-C5 alkylene group.

In one embodiment of the present invention, when X of the structural unit (1) is a divalent group represented by any one of General formulae (4)-(8) above, c and d may represent integers of 0-20 and 1-500, respectively, preferably 0-12 and 1-300, respectively, and more preferably 1-6 (particularly preferably c is 1) and 1-100, respectively.

In one embodiment of the present invention, X of the structural unit (1) is -O-, -S- or a divalent group represented by either one of General formulae (3)-(4) above, and preferably a divalent group represented by General formula (4) above.

Furthermore, examples of the above-mentioned substituent contained in the structural unit (1) include a halogen, a cyano group and an alkenyl group with 5 or less carbons. The number of carbons refers to the total number of carbons, including the number of carbons of the substituent.

In one embodiment of the present invention, the structural unit (1) may be derived from a bisphenol compound. Examples of the bisphenol compound that forms the structural unit (1) include bisphenol C (2,2-bis(3-methyl-4-hydroxyphenyl)propane; BPC), 1,1-bis(4-hydroxy-3-methylphenyl)-1-phenylethane), 1,1 -bis(4-hydroxy-3 - methylphenyl)cyclohexane, 1,1-bis(4-hydroxy-3-methylphenyl)ethane, and bis(4-hydroxy-3-methylphenyl)methane. Among these specific exemplary bisphenol compounds, bisphenol C (2,2-bis(3-methyl-4-hydroxyphenyl)propane) is favorable.

Specifically, the structural unit (1) is preferably derived from bisphenol C (BPC) alone, or from a bisphenol compound containing BPC as the main component.

In one embodiment of the present invention, the polycarbonate resin (A) may contain another structural unit in addition to the structural unit (1). The structural unit other than the structural unit (1) may also be derived from a bisphenol compound.

Examples of the bisphenol compound that forms a structural unit other than Structural unit (1) include, but not limited to, 4,4'-biphenyldiol, bis(4-hydroxyphenyl)methane (bisphenol F; BPF), bis(2-hydroxyphenyl)methane, 2,4'-dihydroxydiphenyl methane, bis(4-hydroxyphenyl)ether, bis(4-hydroxyphenyl)sulfone, 2,4'-dihydroxydiphenyl sulfone, bis(2-hydroxyphenyl)sulfone, bis(4-hydroxy-3-methylphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane (bisphenol E; BPE), 1,1-bis(4-hydroxyphenyl)-1-phenylethane (bisphenol AP; BPAP), bis(4-hydroxyphenyl)diphenyl methane (bisphenol BP; BPBP), 2,2-bis(4-hydroxyphenyl)propane (bisphenol A; BPA), 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane (bisphenol B; BPB), 1,1-bis(4-hydroxyphenyl)cyclohexane (bisphenol Z; BPZ), 1,1-bis(4-hydroxy-3-methylphenyl)cyclohexane, 1,1-bis(4-hydroxyphenyl)cycloundecane, 1,1-bis(4-hydroxyphenyl)cyclododecane (bisphenol CD), 2,2-bis(4-hydroxy-3-allylphenyl)propane, 3,3,5-trimethyl-1,1-bis(4-hydroxyphenyl)cyclohexane, 9,9-bis(4-hydroxy-3-ethylphenyl)fluorene, 9,9-bis(4-hydroxy-3-methylphenyl)fluorene, 9,9-bis(4-hydroxyphenyl)fluorene, $\alpha,\omega$-bis[3-(o-hydroxyphenyl)propyl]polydimethyl diphenyl random copolymer siloxane, $\alpha,\omega$-bis[3-(o-hydroxyphenyl)propyl]polydimethyl siloxane, 4,4'-[1,4-phenylene bis(1-methylethylidene)]bisphenol, 4,4'-[1,3-phenylene bis(1-methylethylidene)]bisphenol, 2,2-bis(4-hydroxy-3-isopropylphenyl)propane (bisphenol G), 1,1-bis(4-hydroxyphenyl)-2-ethylhexane (bisphenol IOTD), 1,1-bis(4-hydroxyphenyl)-2-methylpropane (bisphenol IBTD), 1,1-bis(4-hydroxyphenyl)-2-methylpentane (bisphenol MIBK), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), 2,2-bis(4-hydroxyphenyl)-4-methylpentane, 1,1-bis(4-hydroxyphenyl)decane, and 1,3-bis(4-hydroxyphenyl)-5,7-dimethyladamantane. One or more kinds of them may be used alone or in combination.

In particular, 2,2-bis(4-hydroxyphenyl)propane (bisphenol A; BPA), bisphenol AP, bisphenol Z, bisphenol CD, bisphenol TMC, bisphenol IOTD, bisphenol IBTD and bisphenol MIBK are preferable, and bisphenol A is more preferable among others.

Specifically, in one embodiment of the present invention, the structural unit (1) is preferably a structural unit

derived from BPC represented by Formula (9) below, and the polycarbonate resin (A) may contain, in addition to the structural unit (1), any one or more kinds selected from the group consisting of a structural unit derived from BPA represented by Formula (10) below and structural units represented by Formulae (11)-(21) below.

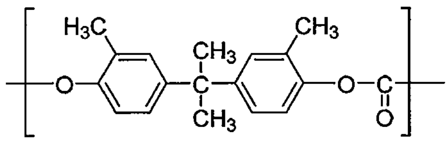
(9)

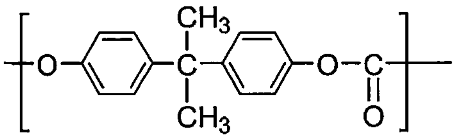
(10)

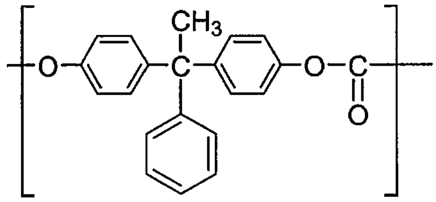
(11)

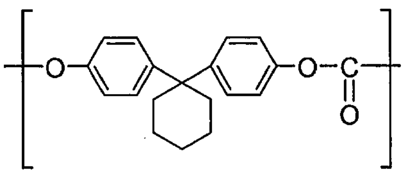
(12)

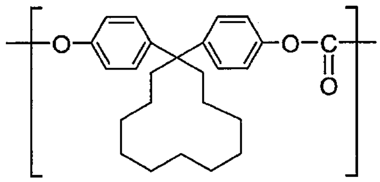
(13)

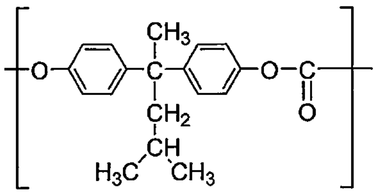
(14)

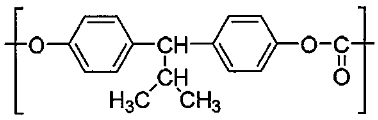
(15)

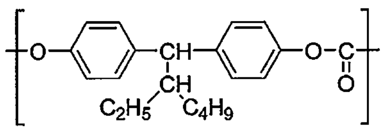
(16)

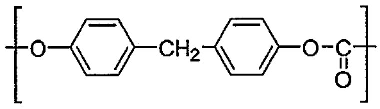

(17)

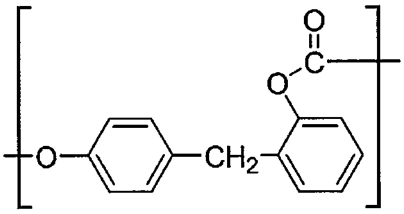

(18)

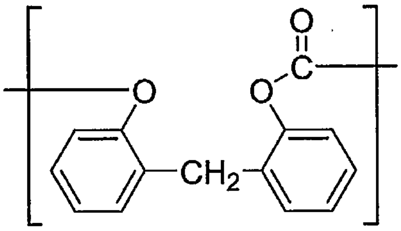

(19)

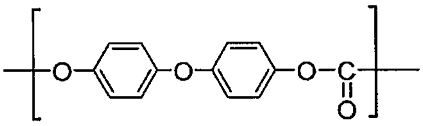

(20)

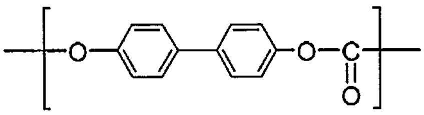

(21)

In one embodiment of the present invention, the structural unit (1) is preferably contained in an amount of not less than 40 mol% relative to the number of moles of all structural units contained in the polycarbonate resin (A).

The structural unit (1) is contained, in the polycarbonate resin (A), in an amount of preferably not less than 50 mol%, more preferably not less than 55 mol% and particularly preferably not less than 60 mol%, relative to the amount of all structural units.

Alternatively, the polycarbonate resin (A) may be composed solely of the structural unit (1). Therefore, the upper limit of the proportion of the structural unit (1) in the polycarbonate resin (A) is not so important, but the proportion of the structural unit (1) in the polycarbonate resin (A) is, for example, not more than 98 mol%, not more than 97 mol% or not more than 95 mol%.

(ii) Terminal structure (2)

In one embodiment of the present invention, $R_3$ in Formula (2) representing the terminal structure of the polycarbonate resin (A) is a C1-C8 alkyl group which may have (but preferably does not have) a substituent such as a hydroxy group.

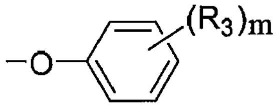

(2)

In one embodiment of the present invention, $R_3$ in Structural formula (2) is preferably a C1-C6 alkyl group, and

more preferably a C1-C4 alkyl group which may be substituted with a hydroxy group.

In one embodiment of the present invention, the value of m representing the number of the substituent $R_3$ in Structural formula (2) is an integer of 0-5, preferably an integer of 0-4, more preferably an integer of 1-3, still more preferably 1 or 2 and particularly preferably 1.

Where a plurality of terminal structures represented by Formula (2) are included in the same polycarbonate molecule, $R_3$ and m are each independently determined for the respective terminal structures.

In one embodiment of the present invention, examples of the monohydric phenol that results a structure (2) at the molecular terminal include, but not limited to, phenol, p-tert-butylphenol (PTBP), p-cumylphenol, octylphenol, a long-chain alkyl-substituted phenol, p-hydroxyphenethyl alcohol (= tyrosol), m-hydroxyphenethyl alcohol, o-hydroxyphenethyl alcohol, o-hydroxybenzyl alcohol (= salicyl alcohol), p-hydroxybenzyl alcohol, m-hydroxybenzyl alcohol, vanillyl alcohol, homovanillyl alcohol, 3-(4-hydroxy-3-methoxyphenyl)-1-propanol, sinapyl alcohol, coniferyl alcohol and p-coumaryl alcohol. In terms of reactivity, p-tert-butylphenol (PTBP), p-hydroxyphenethyl alcohol (PHEP) and p-hydroxybenzyl alcohol are preferable, and p-tert-butylphenol (PTBP) and p-hydroxyphenethyl alcohol are more preferable among others.

In one embodiment of the present invention, the terminal structure represented by Structural formula (2) may be derived from either p-tert-butylphenol (PTBP) or p-hydroxyphenethyl alcohol (PHEP).

In one embodiment of the present invention, the proportion of the terminal structure (2) relative to the number of moles of all structural units contained in the polycarbonate resin (A) is preferably not more than 12 mol%, more preferably not more than 10 mol% and particularly preferably not more than 8.0 mol%. At the same time, the proportion of the terminal structure (2) relative to the number of moles of all structural units contained in the polycarbonate resin (A) is, for example, not less than 0.1 mol%, preferably not less than 0.3 mol%, and more preferably not less than 0.5 mol%.

(iii) Production of polycarbonate resin (A)

The polycarbonate resin (A) used in the present invention can be produced by a common technique, for example, as follows.

The polycarbonate resin used in a coating resin solution of the present invention can be produced by allowing a monohydric phenol that results the terminal structure (2), a bisphenol that results the structural unit (1) and a carbonate ester-forming compound to react, where a known method employed for producing a polycarbonate derived from bisphenol A, for example, direct reaction between a bisphenol and phosgene (phosgene method), transesterification between a bisphenol and bisaryl carbonate (transesterification method), or the like can be employed.

According to the phosgene method, a bisphenol, a monohydric phenol that results the terminal structure (2) and phosgene are allowed to react in the presence of a common acid binding agent and a solvent. The acid binding agent may be, for example, pyridine, a hydroxide of an alkali metal such as sodium hydroxide or potassium hydroxide, or the like, while the solvent may be, for example, methylene chloride, chloroform or the like. Furthermore, in order to promote the polycondensation reaction, a catalyst, for example, a tertiary amine such as triethylamine or a quaternary ammonium salt such as benzyltriethylammonium chloride, is preferably used.

While the monohydric phenol that results the terminal structure (2) can serve as an agent for adjusting the degree of polymerization, an additional monohydric phenol such as phenol, p-t-butylphenol, p-cumylphenol or a long-chain alkyl-substituted phenol can also be used together in an amount of less than 50% by mass relative to the amount of the monohydric phenol that results the terminal structure (2). In addition, an antioxidant such as sodium sulfite or hydrosulfite, a branching agent such as phloroglucin or isatin bisphenol, or the like can also be added in a small amount as desired. The reaction is suitably carried out at a temperature usually in a range of 0-150°C, preferably in a range of 5-40°C. While the reaction time varies depending on the reaction temperature, it is usually 0.5 minutes to 10 hours, and preferably 1 minute to 2 hours. Moreover, pH of the reaction system during the reaction is preferably maintained at 10 or higher.

Alternatively, according to the transesterification method, a bisphenol, a monohydric phenol that results the terminal structure (2) and a bisaryl carbonate are mixed and allowed to react at a high temperature under reduced pressure.

Examples of the bisaryl carbonate include bisallyl carbonates such as diphenyl carbonate, di-p-tolyl carbonate, phenyl-p-tolyl carbonate, di-p-chlorophenyl carbonate and dinaphthyl carbonate. One or more kinds of these compounds may be used alone or in combination. The reaction takes place at a temperature usually in a range of 150-350°C, preferably in a range of 200-300°C, and the pressure is reduced to a final pressure of preferably 1 mmHg or lower so that the phenol resulting from the bisaryl carbonate generated by the transesterification reaction is distilled away from the system. While the reaction time varies depending on the reaction temperature and the degree of pressure reduction, it is usually about 1-24 hours. The reaction is preferably carried out in an inert gas atmosphere such as nitrogen or argon. In addition, a small amount of a molecular weight modifier other than the monohydric phenol that results the terminal structure (2), an antioxidant or a branching agent can also be added as desired to carry out the reaction.

The polycarbonate resin used in the present invention preferably bears solvent solubility, coating property,

adhesiveness, scratch resistance, impact resistance and else in a favorable balance, which are crucial for the coating forming resin to be used in a coating resin solution. If the intrinsic viscosity of the resin is too low, strength of the scratch resistance and the impact resistance will be insufficient, whereas if the intrinsic viscosity is too high, the solvent solubility will be poor and the viscosity of the solution will be high, rendering the coating property poor. A desirable intrinsic viscosity is preferably in a range of 0.3-2.0 dl/g, and more preferably in a range of 0.35-1.5 dl/g.

3. Polyisocyanate compound (B)

According to the present invention, the polycarbonate resin composition contains the polyisocyanate compound (B) as described above.

The polyisocyanate compound contained in the polycarbonate resin composition is preferably a compound that contains two or more isocyanate groups per molecule. By using a compound containing two or more isocyanate groups per molecule as the polyisocyanate compound, a partially crosslinked structure can be formed in the polycarbonate resin composition. As a result, the polycarbonate resin composition can also be made into a polymer composition which is at least partially crosslinked.

Examples of the polyisocyanate compound that can be used in the present invention include, but not limited to, an aliphatic polyisocyanate, an alicyclic polyisocyanate, an aromatic polyisocyanate and an araliphatic polyisocyanate.

Examples of the aliphatic polyisocyanate include, but not limited to, 1,3-trimethylene diisocyanate, 1,4-tetramethylene diisocyanate, 1,6-hexamethylene diisocyanate, 1,9-nonamethylene diisocyanate, 1,10-decamethylene diisocyanate, 2,2,4-trimethylhexamethylene diisocyanate, 2,4,4-trimethylhexamethylene diisocyanate, lysine diisocyanate, 2,2'-diethyl ether diisocyanate and dimer acid diisocyanate, preferably hexamethylene diisocyanate.

Examples of the alicyclic polyisocyanate include, but not limited to, 1,4-cyclohexane diisocyanate, 1,3-bis(isocyanatomethyl)cyclohexane, 1,4-bis(isocyanatomethyl)cyclohexane, 3 -isocyanatomethyl-3,3,5 -trimethylcyclohexane (IPDI, isophorone diisocyanate), bis-(4-isocyanate cyclohexyl)methane (hydrogenated MDI), hydrogenated (1,3- or 1,4-)xylylene diisocyanate and norbornane diisocyanate.

Examples of the aromatic polyisocyanate include, but not limited to, 2,4'-diphenyl methane diisocyanate, 4,4'-diphenyl methane diisocyanate, 1,4-phenylene diisocyanate, 2,4-tolylene diisocyanate, 2,6-tolylene diisocyanate, 3,3'-dimethyl-4,4'-diisocyanate biphenyl, 3,3'-dimethyl-4,4'-diisocyanate diphenyl methane, 1,5-naphthylene diisocyanate, 4,4'-diphenyl ether diisocyanate and tetrachlorophenylene diisocyanate.

Examples of the araliphatic polyisocyanate include, but not limited to, xylylene diisocyanates such as 1,3-xylylene diisocyanate, 1,4-xylylene diisocyanate and (α,α,α',α'-tetramethylxylylene diisocyanate, and 3,3'-methylene ditolylene-4,4'-diisocyanate.

One or more kinds of these polyisocyanate compounds may be used alone or in combination.

In one embodiment of the present invention, the polyisocyanate compound may be, for example, a diisocyanate compound containing two isocyanate groups per molecule, or a prepolymerized diisocyanate obtained by reacting a diisocyanate with a diol, a diamine or the like. Alternatively, it may be a tri- or higher functional isocyanate compound obtained by partial oligomerization of the diisocyanate compound. Any known method may be employed for the oligomerization of the diisocyanate compound, where examples of the oligomerization of the diisocyanate compound include isocyanurate formation, allophanate formation, biuret formation, and urethane formation or urea formation from a polyfunctional alcohol or a polyfunctional amine, respectively. In one embodiment of the present invention, the polyisocyanate compound may be a polyisocyanate having three or more isocyanate groups, for example, triphenylmethane triisocyanate.

In one embodiment of the present invention, the polyisocyanate compound may be a diisocyanate compound containing two isocyanate groups per molecule. Examples of the diisocyanate compound that can be used in the present invention include:

aromatic diisocyanate compounds such as tolylene diisocyanate (TDI), diphenyl methane diisocyanate (MDI), phenylene diisocyanate and naphthylene diisocyanate (NDI);

aliphatic diisocyanate compounds such as 1,6-hexamethylene diisocyanate (HDI) and tetramethylene diisocyanate;

alicyclic diisocyanate compounds such as 2,4-diisocyanate-1-methyleyclohexane, isophorone diisocyanate (IPDI), cyclohexylmethane diisocyanate, methylcyclohexane diisocyanate, norbornane diisocyanate (NBDI), nuclear hydrogenated XDI (H6-XDI) and nuclear hydrogenated MDI (H12-MDI); and

araliphatic diisocyanate compounds such as xylylene diisocyanate (XDI) and tetramethylxylylene diisocyanate (TMXDI).

In a preferred embodiment of the present invention, the polyisocyanate compound may be 1,6-hexamethylene diisocyanate (HDI) in terms of commercial availability and cost.

4. Other components in polycarbonate resin composition

The polycarbonate resin composition may also contain a component other than the polycarbonate resin (A) and the polyisocyanate compound (B), such as a thermoplastic resin other than the polycarbonate resin (A), an additive such as an antioxidant or a UV absorber, an inorganic filler, a conductive filler or the like.

For the sake of simplicity of the structural components, the content of the thermoplastic resin other than the polycarbonate resin (A) contained in the polycarbonate resin composition is preferably not more than 20% by mass, more preferably not more than 15% by mass, still more preferably not more than 10% by mass, yet still more preferably not more than 8% by mass and particularly preferably not more than 5% by mass, relative to the total weight of the polycarbonate resin composition. Moreover, the polycarbonate resin composition is preferably free of a thermoplastic resin other than the polycarbonate resin (A).

5. Resin solution containing polycarbonate resin composition

The coating resin solution of the present invention is a solution obtained by dissolving the above-described polycarbonate resin composition in an organic solvent, for example, a solvent containing a non-halogenated solvent, which, when directly used in this state, results a coating of a so-called clear color. The coating may be colored by further dissolving or dispersing a dye or a pigment of a desired color in the solution.

As mentioned above, the solvent of the coating resin solution of the present invention is an organic solvent, which is preferably a solvent containing a non-halogenated solvent, and more preferably a solvent containing a non-halogenated organic solvent as the main solvent.

The non-halogenated organic solvent that can be used as the solvent of the coating resin solution of the present invention may contain one or more kinds of solvents selected from the group consisting of ester-based solvents, ether-based solvents, carbonate ester-based solvents and ketone-based solvents.

Specifically, the solvent of the coating resin solution of the present invention contains, as the main component, a solvent that is generally used in a paint or the like, examples specifically including ester-based solvents such as methyl acetate, ethyl acetate, propyl acetate, butyl acetate, 2-ethoxy ethyl acetate, 2-methoxy-1-methylethyl acetate and ethyl lactate, ketone-based solvents such as acetone, methyl ethyl ketone, methyl isobutyl ketone, cyclohexanone and isophorone, carbonate ester-based solvents such as dimethyl carbonate and ethyl methyl carbonate, ether-based solvents such as tetrahydrofuran, 1,4-dioxane, diethyl ether, dimethoxymethane, ethyl cellosolve and anisole, and aromatic hydrocarbon-based solvents such as toluene, ethylbenzene, xylene, pseudocumene and mesitylene. In addition, an alcohol-based poor solvent such as ethanol or isopropyl alcohol or a hydrocarbon-based poor solvent such as n-heptane, cyclohexane or mineral spirits may further be used in a small amount.

Among others, the composition is preferably dissolved in an ester-based solvent such as propyl acetate or butyl acetate, a ketone-based solvent such as methyl ethyl ketone or cyclohexanone or an ether-based solvent such as tetrahydrofuran or dimethoxymethane, which are inexpensive, good in workability and relatively safe, and particularly preferably dissolved in methyl ethyl ketone or propyl acetate.

Moreover, since halogenated solvents such as dichloromethane greatly affect the environment of the coating work, they are preferably not used as the main solvent of the coating resin solution of the present invention.

In one embodiment of the present invention, the resin solution contains the above-described polycarbonate resin composition and the non-halogenated organic solvent. In one embodiment of the present invention, the above-described polycarbonate resin composition may be a crosslinked polymer composition which is at least partially crosslinked.

While the viscosity of the coating resin solution of the present invention can be controlled at will according to the intended coating method, it is preferably in a range of 10-20,000 mPa/s. Preferably, the viscosity is 400-20,000 mPa/s for airless spraying, brush painting and roller painting, 100-6,000 mPa·s for air-assisted spraying, and 10-500 mPa·s for dip painting and can spraying.

In order to enhance the color effect of the coating resin solution of the present invention, a pigment, a dye, color particles or particles with a light interfering property can be added. Examples of the pigment and the dye include organic pigments such as an azo pigment or a phthalocyanine pigment, specifically, for example, Red No. 104, Red No. 106, Red No. 201, Red No. 202, Red No. 204, Red No. 215, Red No. 220, Orange No. 203, Orange No. 204, Blue No. 1, Blue No. 404, Yellow No. 205, Yellow No. 401 and Yellow No. 405. Moreover, for imparting a white color, pearl color, metal color or lame appearance, mica titanium, titanium oxide, iron oxide, tin oxide, zirconium oxide, chromium oxide, bismuth oxychloride, silica, chromium, titanium nitride, titanium, magnesium fluoride, gold, silver, nickel or the like may also be used. The particles with a light interfering property refer to particles that enhances the color effect by light reflection or light scattering, examples including glass beads, tiny seashells and mica. They are preferably added as necessary in an amount in a range of 0.0001-10.0% by mass, more preferably in a range of 0.01-5.0% by mass and still more preferably in a range of 0.1-3.0% by mass in the coating.

Furthermore, a rust proofing agent, an antioxidant, a dispersant, a UV absorber, a defoaming agent, a leveling agent or the like can be added as necessary.

Although the amount of the polycarbonate resin added to the coating resin solution of the present invention depends on the intrinsic viscosity and the solvent solubility, it is preferably 1-50% by mass, and more preferably 4-30% by mass. As long as the concentration is within this range, good balance between the solvent solubility and the coating property, as well as improved workability and appearance can be achieved.

A coating obtained by applying the coating resin solution of the present invention is less likely to be damaged or peel off due to scratch, impact or the like during transportation or upon use, as compared to coatings of conventional polycarbonate coating resin solutions.

The thickness of the coating obtained by applying the coating resin solution of the present invention is preferably in a range of 5-200 μm, more preferably 10-120 μm and still more preferably 15-60 μm. A coating thinner than 5 μm may lack strength and the damage is likely to reach the substrate, whereas if the thickness exceeds 200 μm, peeling is likely to be caused due to contraction of the coating, which are economically disadvantageous considering the usage of the eventually peeled off or discarded coating.

## 6. Print ink containing resin solution

The above-described resin solution may be used as a binder resin solution to serve as a print ink. Such a print ink of the present invention can be used, for example, for decoration print. In general, the print ink for decoration print is mainly composed of a solvent, a dye/pigment and a binder resin. Examples of the dye/pigment used in the above-described print ink include, but not limited to, dyes such as anthraquinone- and naphthoquinone-based dyes, inorganic pigments such as titanium oxide, carbon black, calcium carbonate and metal particles, and organic pigments such as an azo pigment and a phthalocyanine pigment. These dye/pigment exists, along with the binder resin, in a dissolved or dispersed state in the ink. A print ink that uses the resin solution of the present invention as a binder resin solution will have excellent adhesiveness.

In addition to the binder resin and the dye/pigment, the above-described print ink may also be added with organic particles, inorganic particles, a mold release agent, an antioxidant, a plasticizer, a dispersant, an infrared absorber, an antistatic agent, a UV absorber, a defoaming agent, a leveling agent or the like as necessary.

Furthermore, while the amount of the binder resin added to the ink depends on the intrinsic viscosity and the solvent solubility, it is preferably 1-70% by mass, and more preferably 5-50% by mass. As long as the concentration of the binder resin is within this range, good balance between the solvent solubility and the ink applicability, as well as improved workability can be achieved.

## 7. Substrate film

A substrate film of the present invention can be obtained by applying the above-described print ink. The print ink is printed on an unprinted substrate film for decoration and then dried to remove the solvent. As a result, the dye/pigment is fixed to the binder resin while the binder resin adheres to the film, thereby obtaining a decoration printed film, i.e., a substrate film applied with the above-described print ink. A common technique can be employed for applying the print ink to the substrate, examples including, but not limited to, screen printing, gravure printing, flexographic printing and the like.

## 8. Film or coating

A film or coating of the present invention contains the above-described polycarbonate resin composition. In one embodiment, a film or a coating containing the above-described polycarbonate resin composition or a crosslinked polymer composition in which at least a part of the above-described polycarbonate resin composition is crosslinked, is provided.

In one embodiment of the present invention, the above-described film or coating can be obtained by applying the coating resin solution or the print ink of the present invention to a substrate and thereafter subjecting the resultant to heating or drying. In one embodiment of the present invention, the above-described film or coating may be either a monolayer or a multilayered laminate.

## 9. Physical properties of polycarbonate resin composition and coating resin solution

### (i) Viscosity average molecular weight (Mv)

In one embodiment of the present invention, the viscosity average molecular weight (Mv) of the polycarbonate

resin composition may be 10,000-60,000. According to the present invention, the viscosity average molecular weight (Mv) of the polycarbonate resin composition is preferably 14,000-55,000, more preferably 16,000-50,000, and still more preferably 18,000-45,000. In a preferred embodiment of the present invention, the viscosity average molecular weight (Mv) of the polycarbonate resin composition may be 20,000-40,000.

<Method for measuring viscosity average molecular weight (Mv)>

According to the present invention, the viscosity-average molecular weight was derived from the following equation:

$$\eta = 1.23 \times 10^{-4} \times Mv^{0.83}$$

where the intrinsic viscosity [η] (deciliters/gram) was determined under the following measurement conditions at a Huggins constant of 0.45.

Measurement instrument: Ubbelohde capillary viscometer
Solvent: Dichloromethane
Concentration of resin solution: 0.5 grams/deciliter
Measurement temperature: 25°C

(ii) Mass average molecular weight (Mw)

The present inventors found that the mass average molecular weight (Mw) of a coating resin solution containing the polycarbonate resin composition, which has been prepared, applied and air-dried, increased when it was subjected to a heat drying treatment. Specifically, such a treatment seems to form a crosslinked polymer composition in which at least a part of the above-described polycarbonate resin composition is crosslinked. As described above, a compound containing two or more isocyanate groups per molecule is used as the polyisocyanate compound in the present invention, and this seems to contribute to the formation of the crosslinked polymer composition.

For example, a compound having two or more isocyanate groups per molecule can be used to obtain a polycarbonate resin composition having a partially crosslinked structure, which has a larger mass average molecular weight (Mw) (mass average molecular weight with respect to polycarbonate (PC)) than that of a polycarbonate resin composition obtained without using said compound, by about 100-10,000 or about 500-5,000.

<Conditions of measurement in gel permeation chromatograph (GPC) analysis>

The mass average molecular weights (Mw) of the polycarbonate resin and the cured polycarbonate resin composition of the present invention were measured by a gel permeation chromatograph analysis conducted under the following conditions.

Instrument used: HPLC system, Aliance manufactured by Waters
Column: Shodex 805L manufactured by Showa Denko K.K. (two columns)
Eluent: Chloroform
Flow rate: 1.0 ml/min
Sample: 0.25 w/v% Chloroform solution sample
Detection: UV detection at 254 nm

Both of the mass average molecular weight (Mw) with respect to polystyrene (PS) and the mass average molecular weight (Mw) with respect to polycarbonate (PC) were determined. Specifically, using the following conversion formula, Mw with respect to PC was derived from Mw with respect to PS obtained by the above-described GPC analysis.

$$\text{Mw (with respect to PC)} = 0.4782 \times [\text{Mw (with respect to PS)}]^{1.014706}$$

(iii) Durability against peeling (adhesiveness)

After the coating resin solution of the present invention was applied, air-dried and subjected to a heat drying treatment, durability against peeling (adhesiveness) was tested by the cross-cut test described below.

<Cross-cut test>

An adhesion test was performed by a cross-cut adhesion test (1 mm spacing) following JIS K5600-5-6 using 24-mm wide sellotape (adhesion 4.01 N/10 mm) manufactured by Nichiban Co., Ltd. compliant with the cross-cut test. Based on the JIS classification, adhesion was assessed on a 0 (no detachment) to 5 (almost entirely detached) scale, which was used as the rate of the durability against peeling.

EXAMPLES

<Example 1>

In 600 ml of a 9 w/w% aqueous sodium hydroxide solution and 200 ml of pure water, 100.6 g (0.39 mol) of 2,2-bis(4-hydroxy-3-methylphenyl)propane (hereinafter, simply referred to as "BPC": manufactured by Honshu Chemical Industry Co., Ltd.), 1.39 g (0.009 mol, content of terminal structure: 2.4 mol%) of PTBP (p-tert-butylphenol) and 0.3 g of hydrosulfite were dissolved.

To this, 200 ml of methylene chloride and 0.08 g of benzyltriethyl ammonium (hereinafter, simply referred to as "TEBAC") were added, and 55.1 g of phosgene was blown into the resultant by spending about 30 minutes while stirring and maintaining the temperature at 15-20°C.

At the end of phosgene blowing, 100 ml of a 9 w/w% aqueous sodium hydroxide solution was added and vigorously stirred to emulsify the reaction solution, to which 0.5 ml of triethylamine was added as a polymerization catalyst to allow polymerization by stirring at 20-30°C for about 40 minutes.

At the end of polymerization, the reaction solution was separated into an aqueous phase and an organic phase. The organic phase was neutralized with phosphoric acid, and repeatedly washed with water until the conductivity of the rinsing liquid (aqueous phase) became 10 μS/cm or lower. The obtained polymer solution was dropped into warm water kept at 60°C to evaporate the solvent away, thereby obtaining a white powdery precipitate. The obtained precipitate was filtered and dried at 105°C for 24 hours, thereby obtaining polymer powder.

The resulting polycarbonate resin (hereinafter, simply referred to as "PC-1") had Mv of 32,400.

A resin composition composed of PC-1 (10 parts by mass) and 1 part by mass (10 parts by mass relative to 100 parts by mass of the polycarbonate resin) of hexamethylene diisocyanate (hereinafter, simply referred to as "HDI") was dissolved in 55 parts by mass of toluene to prepare a paint solution (resin solution). This paint solution was applied to (painted on) a stainless steel plate, air-dried, and then dried at 110°C for 5 hours to give a test piece. Due to the drying process, the resin composition was considered to partially contain crosslinked polymers generated via the reaction between the hydroxy group or the like of the compound contained as impurities and the isocyanate group of HDI.

According to the cross-cut test following JIS K5600-5-6, the test piece was rated 1.

<Example 2>

Assessment was carried out in the same manner as Example 1 except that xylylene diisocyanate (hereinafter, simply referred to as "XDI") was used instead of HDI to prepare a paint solution.

<Example 3>

Polymerization was conducted in the same manner as Example 1 except that the amount of BPC was changed to 65.3 g (0.26 mol), the amount of PTBP was changed to 2.01 g (0.013 mol%, content of terminal structure: 3.0 mol%), and 43.5 g (0.19 mol) of 2,2-bis(4-hydroxyphenyl)propane (hereinafter, simply referred to as "BPA": manufactured by Mitsubishi Chemical Corporation) was used to give a polycarbonate resin (Mv: 26,000; hereinafter, referred to as "PC-2").

PC-2 (10 parts by mass) and 1 part by mass (10 parts by mass relative to 100 parts by mass of the polycarbonate resin) of HDI were dissolved in 55 parts by mass of toluene to prepare and assess a paint solution in the same manner as Example 1.

<Example 4>

Assessment was carried out in the same manner as Example 3 except that tolylene diisocyanate (hereinafter, simply referred to as "TDI") was used instead of HDI to prepare a paint solution.

<Example 5>

Polymerization was conducted in the same manner as Example 3 except that the amount of PTBP was changed

to 0.86 g (0.006 mol, content of terminal structure: 1.3 mol%) to give a polycarbonate resin (Mv: 51,400; hereinafter, referred to as "PC-3'').

PC-3 (10 parts by mass) and 1 part by mass (10 parts by mass relative to 100 parts by mass of the polycarbonate resin) of HDI were dissolved in 55 parts by mass of toluene to prepare and assess a paint solution in the same manner as Example 3.

<Example 6>

A paint solution was prepared and assessed in the same manner as Example 1 except that the amount of HDI was changed to 3 parts by mass (30 parts by mass relative to 100 parts by mass of the polycarbonate resin).

<Example 7>

In 600 ml of a 9 w/w% aqueous sodium hydroxide solution and 200 ml of pure water, 65.3 g (0.26 mol) of 2,2-bis(4-hydroxy-3-methylphenyl-)propane (hereinafter, simply referred to as "BPC": manufactured by Honshu Chemical Industry Co., Ltd.), 43.5 g (0.19 mol) of 2,2-bis(4-hydroxyphenyl)propane (hereinafter, simply referred to as "BPA": manufactured by Mitsubishi Chemical Corporation), 3.06 g (0.022 mol, content of terminal structure: 5.0 mol%) of PHEP (p-hydroxyphenethyl alcohol) and 0.3 g of hydrosulfite were dissolved.

To this, 200 ml of methylene chloride and 0.08 g of benzyltriethylammonium chloride (hereinafter, simply referred to as "TEBAC") were added and then 46.9 g of phosgene was blown into the resultant by spending about 30 minutes while stirring and maintaining the temperature at 15-20°C.

At the end of phosgene blowing, 100 ml of a 9 w/w% aqueous sodium hydroxide solution was added and vigorously stirred to emulsify the reaction solution. At the end of emulsification, 0.5 ml of triethylamine was added to the resultant to allow polymerization by stirring at 20-30°C for about an hour.

At the end of polymerization, the reaction solution was separated into an aqueous phase and an organic phase. The organic phase was neutralized with phosphoric acid, and repeatedly washed with water until the conductivity of the rinsing liquid (aqueous phase) became 10 μS/cm or lower. The obtained polymer solution was dropped into warm water kept at 60°C to evaporate the solvent away, thereby obtaining a white powdery precipitate.

The obtained precipitate was filtered and dried at 105°C for 24 hours, thereby obtaining polymer powder.

The resulting polycarbonate resin (hereinafter, simply referred to as "PC-4") had Mv of 25,500, Mw of 57,000 (with respect to PS) and 32,000 (with respect to PC). PC-4 (10 parts by mass) and 1 part by mass (10 parts by mass relative to 100 parts by mass of the polycarbonate resin) of HDI were dissolved in 55 parts by mass of toluene to prepare and assess a paint solution in the same manner as Example 1. The dried polycarbonate resin composition had Mw of 65,700 (with respect to PS) and 37,000 (with respect to PC). Due to the drying process, a crosslinked polymer was generated via the reaction between the hydroxy group from PHEP and the isocyanate group of HDI in the resin composition.

<Example 8>

PC-4 (10 parts by mass) and 0.01 parts by mass (0.1 parts by mass relative to 100 parts by mass of the polycarbonate resin) of HDI were dissolved in 55 parts by mass of toluene to prepare and assess a paint solution in the same manner as Example 1. The dried polycarbonate resin composition had Mw of 58,400 (with respect to PS) and 32,800 (with respect to PC).

<Example 9>

A paint solution was prepared and assessed in the same manner as Example 3 except that the amount of HDI was changed to 0.8 parts by mass (8 parts by mass relative to 100 parts by mass of the polycarbonate resin).

<Comparative example 1>

Assessment was conducted in the same manner as Example 1 except that a paint solution was prepared without HDI.

<Comparative example 2>

Assessment was conducted in the same manner as Example 3 except that a paint solution was prepared without HDI.

<Comparative example 3>

Polymerization was conducted in the same manner as Example 1 except that 100.3 g (0.35 mol) of 1,1-bis(4-hydroxyphenyl)-1-phenylethane (hereinafter, simply referred to as "BPAP": manufactured by Honshu Chemical Industry Co., Ltd.) was used instead of BPC, and the amount of PTBP was changed to 2.01 g (0.013 mol, content of terminal structure: 3.9 mol%)) to give a polycarbonate resin (Mv: 20,000; hereinafter, simply referred to as "PC-5"). PC-5 (10 parts by mass) and 1 part by mass (10 parts by mass relative to 100 parts by mass of the polycarbonate resin) of HDI were dissolved in 55 parts by mass of toluene to prepare and assess a paint solution in the same manner as Example 1.

<Comparative example 4>

A paint solution was prepared and assessed in the same manner as Example 3 except that the amount of HDI was changed to 3 parts by mass (30 parts by mass relative to 100 parts by mass of the polycarbonate resin).

<Comparative example 5>

Polymerization was conducted in the same manner as Example 1 except that 100.5 g (0.38 mol) of 1,1-bis(4-hydroxyphenyl)cyclohexane (hereinafter, simply referred to as "BPZ": manufactured by Honshu Chemical Industry Co., Ltd.) was used instead of BPC, and the amount of PTBP was changed to 1.13 g (0.008 mol, content of terminal structure: 2.0 mol%)) to give a polycarbonate resin (Mv: 32,500; hereinafter, simply referred to as "PC-6"). A paint solution was prepared and assessed in the same manner as Example 4 except that PC-6 was used instead of PC-2.

<Comparative example 6>

Polymerization was conducted in the same manner as Example 1 except that 90.3 g (0.33 mol) of 2,2-bis(4-hydroxyphenyl)-4-methylpentane (hereinafter, simply referred to as "MIBK": manufactured by Honshu Chemical Industry Co., Ltd.) was used instead of BPC, and the amount of PTBP was changed to 0.63 g (0.004 mol, content of terminal structure: 1.3 mol%)) to give a polycarbonate resin (Mv: 50,000; hereinafter, simply referred to as "PC-7"). A paint solution was prepared and assessed in the same manner as Example 1 except that PC-7 was used instead of PC-1.

The compositions and the durability against peeling measured for the paint solutions of the above-described examples and comparative examples are shown in the following table.

Table 1

| Example / Comparative example | PC resin | | | Polyisocyanate (Amount added relative to PC resin/ Content) | Durability against peeling |
|---|---|---|---|---|---|
| | Abbreviation | Main backbone | Terminal structure | | |
| **Example 1** | **PC-1** | **BPC** | **PTBP** | **HDI (10 parts by mass/9.1% by mass)** | **1** |
| **Example 2** | **PC-1** | **BPC** | **PTBP** | **XDI (10 parts by mass/9.1% by mass)** | **1** |
| **Example 3** | **PC-2** | **BPC/BPA** | **PTBP** | **HDI (10 parts by mass/9.1% by mass)** | **1** |
| **Example 4** | **PC-2** | **BPC/BPA** | **PTBP** | **TDI (10 parts by mass/9.1% by mass)** | **2** |
| **Example 5** | **PC-3** | **BPC/BPA** | **PTBP** | **HDI (10 parts by mass/9.1% by mass)** | **1** |
| **Example 6** | **PC-1** | **BPC** | **PTBP** | **HDI (30 parts by mass/23.0% by mass)** | **1** |
| **Example 7** | **PC-4** | **BPC/BPA** | **PHEP** | **HDI (10 parts by mass/9.1% by mass)** | **0** |
| **Example 8** | **PC-4** | **BPC/BPA** | **PHEP** | **HDI (0.1 parts by mass/0.1% by mass)** | **1** |

(continued)

| Example / Comparative example | PC resin | | | Polyisocyanate (Amount added relative to PC resin/ Content) | Durability against peeling |
|---|---|---|---|---|---|
| | Abbreviation | Main backbone | Terminal structure | | |
| **Example 9** | **PC-2** | **BPC/BPA** | **PTBP** | **HDI (8 parts by mass/7.4% by mass)** | **4** |
| **Comparative example 1** | **PC-1** | **BPC** | **PTBP** | **-** | **5** |
| **Comparative example 2** | **PC-2** | **BPC/BPA** | **PTBP** | **-** | **5** |
| **Comparative example 3** | **PC-5** | **BPAP** | **PTBP** | **HDI (10 parts by mass/9.1% by mass)** | **5** |
| **Comparative example 4** | **PC-5** | **BPAP** | **PTBP** | **HDI (30 parts by mass/23.0% by mass)** | **5** |
| **Comparative example 5** | **PC-6** | **BPZ** | **PTBP** | **HDI (10 parts by mass/9.1% by mass)** | **5** |
| **Comparative example 6** | **PC-7** | **MIBK** | **PTBP** | **HDI (10 parts by mass/9.1% by mass)** | **5** |

As described above, the resin composition of the present invention had improved adhesiveness between the coating and a substrate and thus was demonstrated to be useful as a resin blend composition comprising a polycarbonate resin and other resin.

INDUSTRIAL APPLICABILITY

The resin composition of the present invention can be used as a coating resin solution for protecting objects. In particular, the resin composition of the present invention is favorable in the fields that require durability of coating in daily life, like IC cards and security cards.

## Claims

**1.** A polycarbonate resin composition comprising:

a polycarbonate resin (A) containing a structural unit represented by General formula (1) below and a terminal structure represented by General formula (2) below; and
a polyisocyanate compound (B),
wherein the polyisocyanate compound (B) is contained in an amount of not less than 0.1% by mass relative to the total mass of the polycarbonate resin (A) and the polyisocyanate composition (B):

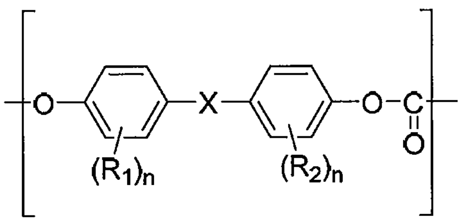

(1)

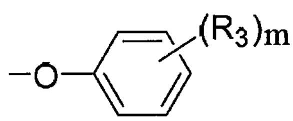

(2)

(in Formula (1),

$R_1$ and $R_2$ are each independently a C1-C4 alkyl group,
n are each independently an integer of 0-4 (provided that not all of n are zero), and
X is -O-, -S-, -SO-, $-SO_2-$, -CO- or a divalent group represented by any of General formulae (3)-(8) below),
(in Formula (2),
R3 each independently represent a C1-C8 alkyl group which may be substituted with a hydroxy group, and
m is an integer of 0-5),

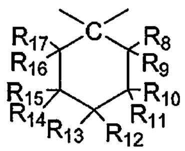 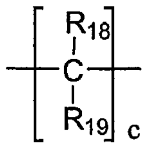 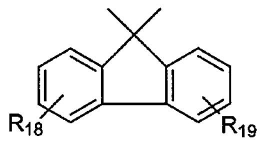

(3) (4) (5)

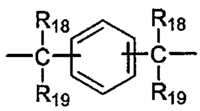 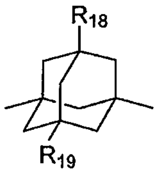 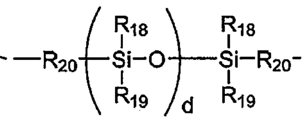

(6) (7) (8)

(in General formula (3),

$R_8$-$R_{17}$ each independently represent hydrogen or a C1-C3 alkyl group, and
at least one of $R_8$-$R_{17}$ represents a C1-C3 alkyl group; and
in General formulae (4)-(8),
$R_{18}$ and $R_{19}$ each independently represent hydrogen, a halogen, an optionally substituted C1-C20 alkyl group, an optionally substituted C1-C5 alkoxy group, an optionally substituted C6-C12 aryl group, an optionally substituted C7-C17 aralkyl group or an optionally substituted C2-C15 alkenyl group, or
$R_{18}$ and $R_{19}$ bind to each other to form a C3-C20 carbocyclic ring or a C1-C20 heterocyclic ring,
$R_{20}$ is an optionally substituted C1-C9 alkylene group,
c represents an integer of 0-20, and
d represents an integer of 1-500).

**2.** The polycarbonate resin composition according to Claim 1, wherein, in General formula (1) above, $R_1$ and $R_2$ are methyl groups, and n are all 1.

**3.** The polycarbonate resin composition according to Claim 2, wherein, in General formula (4) above, Ris and $R_{19}$ are methyl groups, and c is 1.

**4.** The polycarbonate resin composition according to any one of Claims 1 to 3, wherein the structural unit represented by General formula (1) above is contained in an amount of not less than 40 mol% relative to the number of moles of all structural units contained in the polycarbonate resin (A).

**5.** The polycarbonate resin composition according to any one of Claims 1 to 4, wherein $R_3$ in General formula (2), as the terminal group of the polycarbonate resin (A), is a C1-C4 alkyl group which may be substituted with one hydroxy

group.

**6.** The polycarbonate resin composition according to any one of Claims 1 to 5, wherein the viscosity average molecular weight (Mv) of the polycarbonate resin is 10,000-60,000.

**7.** The polycarbonate resin composition according to any one of Claims 1 to 6, which is a mixture of the polycarbonate resin (A) and the polyisocyanate compound (B).

**8.** The polycarbonate resin composition according to any one of Claims 1 to 7, wherein the polyisocyanate compound (B) comprises at least either one of hexamethylene diisocyanate and xylylene diisocyanate.

**9.** A resin solution comprising the polycarbonate resin composition according to any one of Claims 1 to 8, and an organic solvent.

**10.** The resin solution according to Claim 9, wherein the organic solvent comprises at least any one of a non-halogenated solvent, an ester-based solvent, an ether-based solvent, a carbonate ester-based solvent and a ketone-based solvent.

**11.** A print ink, in which the resin solution according to either one of Claims 9 and 10 is used as a binder resin solution.

**12.** A substrate film applied with the print ink according to Claim 11.

**13.** A film or coating, comprising the polycarbonate resin composition according to any one of Claims 1 to 8.

**14.** The film or coating according to Claim 13, wherein the film comprises a film laminate.

**INTERNATIONAL SEARCH REPORT**

International application No.
PCT/JP2020/033434

A. CLASSIFICATION OF SUBJECT MATTER
C08K 5/29(2006.01)i; C08L 69/00(2006.01)i; C09D 169/00(2006.01)i; C09D 11/10(2014.01)i; C08G 18/44(2006.01)i
FI: C08L69/00; C08K5/29; C08G18/44; C09D11/10; C09D169/00
According to International Patent Classification (IPC) or to both national classification and IPC

B. FIELDS SEARCHED
Minimum documentation searched (classification system followed by classification symbols)
C08K5/29; C08L69/00; C09D169/00; C09D11/10; C08G18/44

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-341574 A (KONICA CORP.) 27 November 2002 (2002-11-27) claims, paragraphs [0007], [0028], [0031]-[0037], [0067], [0070], [0078], [0081]-[0085], examples | 1-4, 6-10, 13-14 |
| X<br>Y | JP 2008-101191 A (IDEMITSU KOSAN CO., LTD.) 01 May 2008 (2008-05-01) claims, paragraphs [0005], [0020]-[0023], [0025]-[0027], [0032]-[0040], [0045]-[0049], examples | 1-14<br>1-14 |
| Y | JP 2018-051959 A (TOPPAN PRINTING CO., LTD.) 05 April 2018 (2018-04-05) paragraph [0017] | 1-14 |
| Y | WO 2017/126432 A1 (OJI HOLDINGS CORPORATION) 27 July 2017 (2017-07-27) paragraphs [0022]-[0028], [0035], [0141] | 1-14 |
| A | JP 2008-019417 A (MITSUBISHI CHEMICAL CORP.) 31 January 2008 (2008-01-31) entire text | 1-14 |
| A | JP 2015-218325 A (TEIJIN LTD.) 07 December 2015 (2015-12-07) entire text | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 29 October 2020 (29.10.2020) | 10 November 2020 (10.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/033434

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/046897 A1 (KONICA MINOLTA, INC.) 04 April 2013 (2013-04-04) entire text | 1-14 |
| A | JP 2011-140187 A (TEIJIN CHEMICALS LTD.) 21 July 2011 (2011-07-21) entire text | 1-14 |

Form PCT/ISA/210 (continuation of second sheet) (January 2015)

**INTERNATIONAL SEARCH REPORT**
Information on patent family members

International application no.
PCT/JP2020/033434

| Patent Documents referred in the Report | Publication Date | Patent Family | Publication Date |
|---|---|---|---|
| JP 2002-341574 A | 27 Nov. 2002 | (Family: none) | |
| JP 2008-101191 A | 01 May 2008 | (Family: none) | |
| JP 2018-051959 A | 05 Apr. 2018 | (Family: none) | |
| WO 2017/126432 A1 | 27 Jul. 2017 | EP 3406442 A1 paragraphs [0024]-[0030], [0040]-[0041], [0161] CN 108883619 A | |
| JP 2008-019417 A | 31 Jan. 2008 | US 2010/0232830 A1 entire text EP 1997857 A1 CN 101405349 A | |
| JP 2015-218325 A | 07 Dec. 2015 | (Family: none) | |
| WO 2013/046897 A1 | 04 Apr. 2013 | (Family: none) | |
| JP 2011-140187 A | 21 Jul. 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014024789 A
- JP 6340811 B